# EUROPÄISCHE PATENTSCHRIFT

(11) **EP 1 154 233 B1**
(45) Veröffentlichungstag und Bekanntmachung des Hinweises auf die Patenterteilung: **30.08.2006**
(21) Anmeldenummer: 01111164.8
(22) Anmeldetag: 10.05.2001
(51) Int. Cl.: G01C 15/00, G01C 15/10

(54) **Lasermessgerät und Verfahren zum Ausrichten eines Laserstrahls**
Laser measuring device and method for aligning a laser beam
Dispositif de mesure à laser et méthode pour aligner un faisceau laser

(30) Priorität: 10.05.2000 DE 10022796
(43) Veröffentlichungstag der Anmeldung: 14.11.2001
(73) Patentinhaber: Quante Baulaser GmbH, 45525 Hattingen (DE)
(72) Erfinder: Platte, Daniel, Dr. rer.nat. Dipl.-Phys., 45277 Essen (DE); Sahle, Kurt, Dipl.-Ing., 58285 Gevelsberg (DE)
(74) Vertreter: HOFFMANN EITLE

(56) Entgegenhaltungen:
- EP-A- 0 699 891
- WO-A-00/14480
- DE-A- 19 814 149
- US-A- 3 909 952
- US-A- 4 352 560
- US-A- 4 988 192
- US-A- 5 531 031
- US-A- 5 572 797
- US-A- 5 636 018
- US-A- 5 839 199

## Beschreibung

### TECHNISCHES GEBIET

Die Erfindung betrifft ein Lasermessgerät und ein Verfahren zum Ausrichten eines von einem Lasermessgerät erzeugten Laserstrahls.

Auf dem Gebiet der Vermessungs- und Bautechnik werden Lasermessgeräte eingesetzt, um zum einen bestimmte örtliche Gegebenheiten zu vermessen und zum anderen mittels eines erzeugten Laserstrahls eine Ausrichtung von Gegenständen zu unterstützen, die in einer bestimmten Weise erstellt oder angeordnet werden sollen. Insbesondere auf dem Gebiet des Kanalbaus finden Lasermessgeräte Verwendung, mittels derer ein in einer bestimmten Richtung und mit einer bestimmten Neigung oder Steigung ausgerichteter Laserstrahl verwendet wird, um einzelne Rohrelemente entlang des erzeugten Laserstrahls zu verlegen.

### STAND DER TECHNIK

Aus der EP 0 699 891 A1 ist ein für diesen Zweck geeignetes Lasermessgerät bekannt, das eine Laserstrahlerzeugungseinrichtung und ein Steigungsmesswerk aufweist. Mittels einer Einrichtung zum Verstellen des Steigungsmesswerks wird zunächst ein bestimmter Winkel zwischen dem Steigungsmesswerk und der Laserstrahlerzeugungseinrichtung eingestellt, der mittels eines Encoders gemessen wird. Zu diesem Zweck ist an dem Rohr, in dem die Laseroptik aufgenommen ist, ein Spindeltrieb befestigt, der über ein Hebelgetriebe auf den Encoder wirkt. Nachfolgend wird das Steigungsmesswerk zusammen mit der Laserstrahlerzeugungseinrichtung in eine Position gebracht, in der ein an dem Steigungsmesswerk angebrachter Lagesensor die Nulllage anzeigt. Hierfür ist ein weiterer Spindeltrieb vorgesehen, der zwischen dem Rohr für die Laseroptik und dem Gerätegehäuse wirkt. Nach diesem Vorgang ist der erzeugte Laserstrahl unter dem vorangehend für das Steigungsmesswerk gemessenen Winkel bezüglich der Horizontalen ausgerichtet.

Bei dem bekannten Lasermessgerät erfolgt sowohl die Verstellung des Steigungsmesswerks bezüglich der Laserstrahlerzeugungseinrichtung als auch die Verstellung der Laserstrahlerzeugungseinrichtung zusammen mit dem Steigungsmesswerk und der zugeordneten Verstelleinrichtung mittels der genannten Spindeln und Hebelgetriebe. Aufgrund der Verwendung von Spindeln und der Übertragung der erzeugten Verstellbewegung mittels angeflanschter Hebel kann bei dem bekannten Lasermessgerät nicht nur lediglich ein vergleichsweise kleiner Verstellbereich realisiert werden, sondern das Gerät weist aufgrund der ausladenden Antriebe einen relativ hohen Platzbedarf auf.

### DARSTELLUNG DER ERFINDUNG

Der Erfindung liegt die Aufgabe zugrunde, bei einer geringeren Baugröße des Geräts verbesserte Verstell- und Einsatzmöglichkeiten des erzeugten Laserstrahls zu schaffen.

Die Lösung dieser Aufgabe erfolgt durch das Lasermessgerät nach dem Patentansprüch 1 und durch ein Verfahren nach Anspruch 13.

Bei dem erfindungsgemäßen Lasermessgerät nach Anspruch 1 ist die Laserstrahlerzeugungseinrichtung über eine Aufnahme um eine Drehachse drehbar gelagert. Es ist ebenfalls ein Steigungsmesswerk vorhanden, das einen Lagesensor umfasst. Das Steigungsmesswerk und der Lagesensor sind relativ zur Laserstrahlerzeugungseinrichtung um die Drehachse verdrehbar, um die auch die Laserstrahlerzeugungseinrichtung verdrehbar gelagert ist. Durch die gemeinsame Aufnahme wird die Baugröße des erfindungsgemäßen Lasermessgerätes gering gehalten und die auch in dieser Ausführungsform der Erfindung vorgesehenen Verdreheinrichtungen wirken unmittelbar zwischen der Aufnahme und dem zu verdrehenden Bauteil. Das Steigungsmesswerk lässt sich über eine Einrichtung relativ zur Aufnahme verdrehen und verriegeln, so dass beispielsweise der Lagesensor in die horizontale Lage gebracht werden kann, d.h. gegenüber einem absoluten Horizont ausgerichtet. Das Lasermessgerät umfasst erfindungsgemäß ferner eine Einrichtung, mit der die Laserstrahlerzeugungseinrichtung relativ zum Steigungsmesswerk verdreht werden kann, um den Laserstrahl um einen kontrollierten Drehwinkel auslenken zu können. Des weiteren ist erfindungsgemäß als Teil dieser Einrichtung oder als weitere Einrichtung eine Einrichtung vorgesehen, mit der die Lage des Lagesensors gegenüber der Umgebung, die Lage der Laserstrahlerzeugungseinrichtung und die Verdrehung der Laserstrahlerzeugungseinrichtung relativ zum Lagesensor erfasst werden kann. Somit lässt sich die Austrittsrichtung des Laserstrahls relativ zur Umgebung des Lasermessgeräts bestimmen. Diese Einrichtung kann ferner die Verdreheinrichtungen in Abhängigkeit von den erfassten Lagen steuern, wodurch der Laserstrahl die gewünschte Richtung einnimmt. Diese Einrichtungen können geeigneterweise in einem einzigen Regler kombiniert sein. Es ist jedoch ebenfalls möglich, diese Funktionen über getrennte Regler zu verwirklichen, oder sie weiter aufzusplitten und einzeln zu verwirklichen, je nach dem ob für die gewünschten Funktionen Standardbauteile zur Verfügung stehen, ob der im Gerät zur Verfügung stehende Platz dies zulässt, oder nach weiteren regelungstechnischen und fertigungstechnischen Gesichtspunkten.

Erfindungsgemäß weist das Lasermessgerät nach dem Anspruch 1 zumindest ein Dreh-Eingriffselement auf, das die Verdrehachse der Laserstrahlerzeugungseinrichtung zumindest teilweise umgibt. Hierbei kommt es darauf an, dass die Drehverstellung der Laserstrahlerzeugungseinrichtung gewissermaßen unmittelbar über dieses die Laserstrahlerzeugungseinrichtung zumindest über einen gewissen Winkelbereich umgebende Dreh-Eingriffselement erfolgt. Das Dreh-Eingriffselement ist im Gegensatz zu denjenigen Hebeln und dergleichen, mittels derer beim Stand der Technik die Drehbetätigung von einer Spindel oder ähnlichem auf die Laserstrahlerzeugungseinrichtung übertragen wird, in der unmittelbaren Umgebung der Laserstrahlerzeugungseinrichtung vorgesehen. Deshalb ist die Verstellmöglichkeit der Laserstrahlerzeugungseinrichtung maßgeblich erweitert, und der zugehörige Mechanismus kann ohne weiteres in einem Gehäuse untergebracht werden, das hinsichtlich seiner Außenabmessungen für den Einsatz auch in Kanalrohren kleinerer Durchmesser, beispielsweise 150 mm geeignet ist.

Beispielsweise kann das oder können die Dreh-Eingriffselemente Zahnradsegmente sein, auf das oder auf die für die Verstellung der Laserstrahlerzeugungseinrichtung bzw. des Steigungsmesswerks ein von einem Motor angetriebenes Zahnritzel wirkt. Auch diese Zahnritzel können in unmittelbarer Umgebung ihres Dreh-Eingriffselements angeordnet werden und eine Verstellung der Laserstrahlerzeugungseinrichtung über einen vergleichsweise großen Winkelbereich bewirken. Obgleich ein Dreheingriff über Zahnradsegmente derzeit bevorzugt ist, lässt sich der Grundgedanke der vorliegenden Erfindung auch über andere Ausführungsformen verwirklichen, z.B. über Riemenantriebe, Reibradantriebe, Kettenantriebe, hydraulische Antriebe, Schubkurbelgetriebe oder ähnliches. Im Gegensatz zu diesen erfindungsgemäßen Lösungen mussten gemäß dem Stand der Technik vergleichsweise lange Spindeln vorgesehen sein, um einen vergrößerten Verstellbereich der Laserstrahlerzeugungseinrichtung zu realisieren. Dementsprechend kann der Grundgedanke der Erfindung auch darin gesehen werden, dass ein Drehantrieb auf ein Element in der Umgebung der Laserstrahlerzeugungseinrichtung wirkt. Die kompakten Ausmaße des Verstellmechanismus können dadurch realisiert werden, dass jegliche Hebel, Arme oder dergleichen für die Übertragung der Drehbewegung zu der Laserstrahlerzeugungseinrichtung entfallen können.

Bevorzugte Weiterbildungen des erfindungsgemäßen Lasermessgeräts sind in den abhängigen Ansprüchen beschrieben.

Eine Fortbildung der erfindungsgemäßen Lasergeräte sieht vor, dass die Aufnahme, in der die Laserstrahlerzeugungseinrichtung verdrehbar gelagert ist, die Laserstrahlerzeugungseinrichtung wesentlich U-förmig umgibt, wobei es besonders bevorzugt ist, dass die Verdreheinrichtungen in dem durch die U-Form der Aufnahme gebildeten Raum angeordnet sind. Diese Weiterbildung ermöglicht es, das Lasermessgerät besonders kompakt auszuführen.

Wenngleich die Erfindung aufgrund der vorangehend beschriebenen Maßnahmen in einer beliebigen Ausführung des Dreh-Eingriffselements zu Vorteilen im Hinblick auf die Unmittelbarkeit und deshalb Genauigkeit der Verstellung bietet, kann eine vorteilhafte Erweiterung der Einsatzfähigkeit des Lasermessgeräts dadurch erreicht werden, dass das Dreh-Eingriffselement die Drehachse der Laserstrahlerzeugungseinrichtung über einen Winkel von mehr als etwa 50° umgibt. In dieser Ausführungsform kann, wie nachfolgend genauer beschrieben, ein aufgefächerter Laserstrahl erzeugt werden, der durch seine geeignete Erfassung an der Oberfläche in eine bestimmte Ausrichtung gebracht wird, die dann, ohne zu befürchtende Ungenauigkeiten, in einen Graben übertragen werden kann, um entlang der eingestellten Richtung eine Vielzahl von Rohrelementen zu verlegen.

Gemäß einer bevorzugten Ausführungsform, bei der das Dreh-Eingriffselement die Laserstrahlerzeugungseinrichtung um zumindest etwa 250° umgibt, können weitere Einsatzmöglichkeiten erreicht werden. Neben der grundsätzlich erforderlichen Leitlinienfunktion und der vorangehend beschriebenen Möglichkeit einer Fluchtübertragung ist bei einem Lasermessgerät mit einem Verstellwinkel der Laserstrahlerzeugungseinrichtung in der vorangehend genannten Größenordnung sowohl das Aufwärts- als auch das Abwärtsloten mittels des Arbeits-Laserstrahls möglich. Hierbei wird von der Umgebung, typischerweise von der Oberfläche, lotrecht nach unten ein bestimmter Messpunkt definiert. In ähnlicher Weise erfolgt das Aufwärtsloten durch das Aussenden eines Laserstrahls aus einem Gerinne, einer ausgehobenen Grube oder einem Schacht heraus zu der Umgebung, typischerweise zur Oberfläche, beispielsweise um bei einer Zwangslage des Lasermessgeräts in einem Gerinne an der Oberfläche diese Lage erkennen und berücksichtigen zu können. Es ist ohne weiteres ersichtlich, dass der erforderliche Verstellbereich der Laserstrahlerzeugungseinrichtung von mindestens 180° durch die erfindungsgemäße Maßnahme, nämlich ein die Laserstrahlerzeugungseinrichtung umgebendes Dreh-Eingriffselement, erreicht werden kann. Dies ist bei der Verwendung eines Verstellmechanismus mit Spindeln und dergleichen nicht möglich oder erfordert ein Gehäuse, das wegen seiner Größe für den bestimmungsgemäßen Einsatz nicht geeignet wäre.

Für die konkrete Ausgestaltung des Dreh-Eingriffselements hat sich die Verwendung eines Zahnradsegments als besonders vorteilhaft erwiesen.

Hinsichtlich einer spielfreien Verstellung und Verriegelung des Steigungsmesswerkes und/oder der Laserstrahlerzeugungseinrichtung wird bevorzugt, das Dreh-Eingriffselement und ein damit zusammenwirkendes Antriebselement federnd gegeneinander zu verspannen.

Für die Realisierung der vorangehend bereits angedeuteten Fluchtübertragung wird bevorzugt, einen oszillierend antreibbaren Spiegel vorzusehen, auf den der Laserstrahl derart gerichtet werden kann, dass ein aufgefächerter Laserstrahl erzeugt wird. Ein aufgefächerter Laserstrahl, mit dem erfindungsgemäß die Fluchtübertragung besonders vorteilhaft verwirklicht werden kann, kann jedoch auch über eine zum Arbeitslaserstrahl den Anforderungen entsprechend ausgerichtete Hilfslichtquelle mit einer geeigneten Optik erzeugt werden. Beispielsweise könnte in dem erfindungsgemäßen Lasermessgerät eine zweite Laserdiode mit einer geeignet geschliffenen Linse vorgesehen sein.

### KURZE BESCHREIBUNG DER ZEICHNUNGEN

Nachfolgend wird eine bevorzugte Ausführungsform der Erfindung rein beispielhaft unter Bezugnahme auf die Zeichnungen näher beschrieben.

Es zeigen:
- Fig. 1: eine Seitenansicht wesentlicher Elemente eines Beispiel eines Lasermessgeräts
- Fig. 2: eine der Fig. 1 entsprechende Ansicht des beispielhaften Lasermessgeräts in einer zweiten Betriebsstellung;
- Fig. 3: eine der Fig. 1 entsprechende Ansicht des beispielhaften Lasermessgeräts in einer dritten Betriebsstellung;
- Fig. 4: eine der Fig. 1 entsprechende Ansicht des beispielhaften Lasermessgeräts in einer vierten Betriebsstellung;
- Fig. 5: eine der Fig. 1 entsprechende Ansicht des beispielhaften Lasermessgeräts in einer fünften Betriebsstellung;
- Fig. 6: eine Seitenansicht wesentlicher Elemente der Ausführungsform des erfindungsgemäßen Lasermessgeräts in der der Fig. 1 entsprechenden Betriebsstellung;
- Fig. 7: eine Draufsicht auf die in der Fig. 6 dargestellte Ausführungsform;
- Fig. 8: eine Vorderansicht der in den Fig. 6 und 7 dargestellten Ausführungsform, bei der einige Teile aufgebrochen sind, um die Lagerung der Lasererzeugungseinrichtung und des Steigungsmesswerks klarer hervorgehen zu lassen; und
- Fig. 9: eine der Fig. 8 entsprechende Ansicht, bei der mehrere Teile im Teilschnitt dargestellt sind, zur Vereinfachung der Darstellung andere Bauelemente weggelassen wurden, und aus der besonders gut die Regelung des erfindungsgemäßen Lasermessgeräts hervorgeht.

### AUSFÜHRLICHE BESCHREIBUNG EINES BEISPIELS UND BEVORZUGTER AUSFÜHRUNGSBEISPIELE DER ERFINDUNG

Es sei zunächst darauf hingewiesen, dass in sämtlichen Figuren der besseren Übersichtlichkeit halber lediglich die für die Erläuterung der Erfindung erforderlichen Konstruktionseinheiten gezeigt sind, und dass beispielsweise ein Schutzgehäuse, welches das erfindungsgemäße Lasermessgerät 10 umgibt, lediglich mit einem Abschnitt, der als E7 bezeichnet ist, gezeigt ist und der einfacheren Darstellung wegen in den die zweite Ausführungsform betreffenden Figuren ganz weggelassen ist. Ferner versteht es sich, dass an dem erfindungsgemäßen Lasermessgerät verschiedene Aufstelladaptionen, Ablese- und Kontrollmittel sowie eine Stromversorgung und eine Steuerungselektronik vorgesehen sind, von denen in Fig. 9 nur einige schematisch dargestellt sind. Des weiteren weist das Lasermessgerät bevorzugt einen Fernbedienungsempfänger zur Befehlseingabe durch eine Fernbedienung sowie eine Empfangseinrichtung zur automatisierten Richtfindung auf. Für die Schilderung der Erfindung gemäß einer bevorzugten Ausführungsform sind jedoch in erster Linie die nachfolgend beschriebenen Elemente von Bedeutung.

In den Figuren sind sich bei den beiden dargestellten Ausführungsbeispielen entsprechende Bauteile mit den gleichen Bezugsziffern bezeichnet. So ist mit E1 ein (in einer Seitenansicht) C-förmiges oder L-förmiges Drehgestell zur Aufnahme der Achse A1 bezeichnet. Das Drehgestell E1 ist mit dem Gehäuse derart drehbar verbunden, dass es mittels der Wirkung des Motors M3 um die Achse A1 bezüglich des Gehäuses drehbar ist. Wie nachfolgend noch genauer erläutert wird, sind im Rahmen einer Drehbewegung um die Achse A1 sämtliche in den Figuren gezeigten Elemente zusammen mit dem Drehgestell E1 verdrehbar. Das Drehgestell E1 weist ferner in seinem unteren Bereich eine Durchtrittsmöglichkeit für den Laserstrahl auf, wie nachfolgend noch genauer erläutert ist. Ferner sind an dem Drehgestell E1 die Drehlagerung der Achse A2 und ein Motor M4, welcher der Verstellung der gezeigten Elemente um die Achse A2 dient, angebracht.

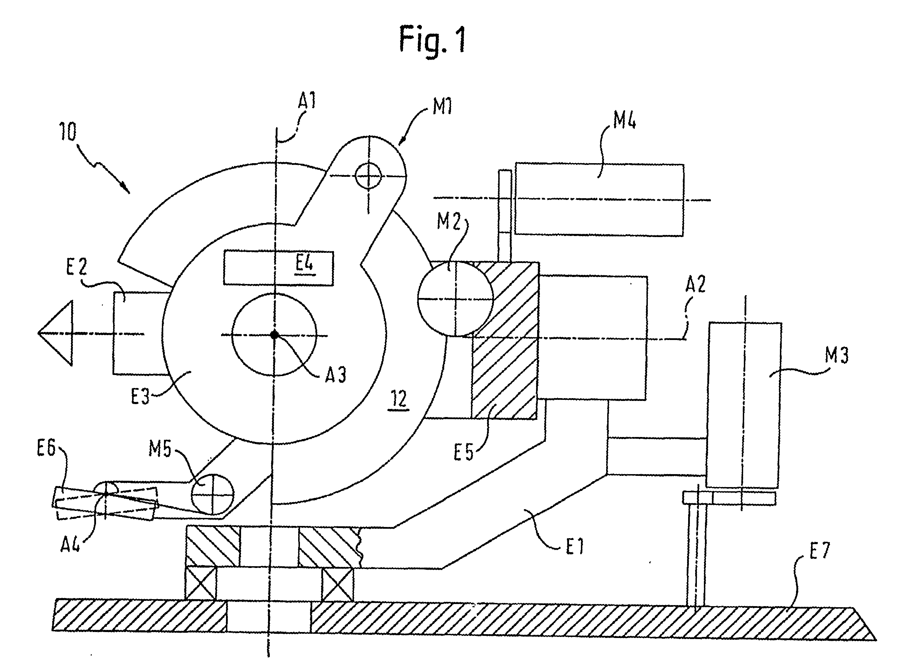

Mit E5 ist ein (in einer Draufsicht) U-förmiges Gestell zur Lagerung der in einer Verwendungsstellung horizontalen Achse A3 vorgesehen. Das U-förmige Gestell E5 ist mittels des Motors M4 um eine ebenfalls horizontale Achse, die senkrecht zu der Achse A3 ist, drehbar. Ferner weist das U-förmige Gestell E5, was in der Zeichnung nicht dargestellt ist, einen Lagesensor zur Erfassung einer Horizontallage des Gestells E5 auf. An dem Gestell E5 ist schließlich der Motor M2 angebracht (Beispiel der Fig. 1-5), bzw. sind über eine (in der Vorderansicht) V-förmige Aufnahme E8 die Motoren M1 und M2 angebracht (erfindungemässe Ausführungsform).

Die Achsen A1, A2 und A3 bilden in den dargestellten Ausführungsbeispielen ein orthonormales Koordinatensystem, d.h. die drei Achsen stehen rechtwinkelig aufeinander und haben einen gemeinsamen Schnittpunkt. Da es im Rahmen von Fertigungstoleranzen oder dergleichen vorkommen kann, dass die Achsen nicht strikt rechtwinkelig zueinander liegen, sondern vielmehr Abweichungen von dieser Lage bis zur Windschiefigkeit aufweisen können, sei darauf hingewiesen, dass solche Abweichungen über einen entsprechenden Ausgleich in der Regelung kompensiert werden können.

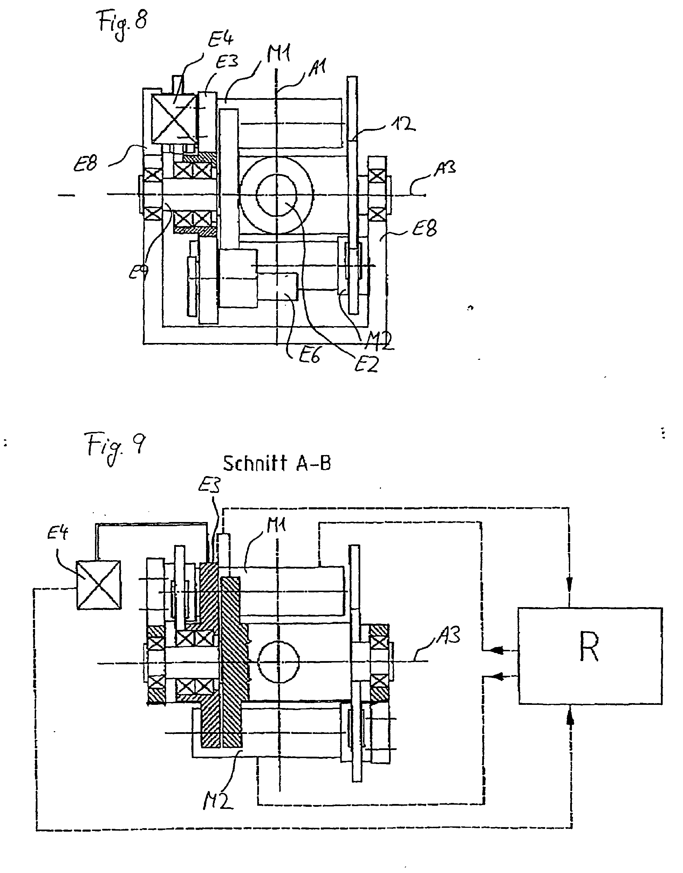

Der Motor M2 dient der Drehverstellung der Laserstrahlerzeugungseinrichtung, die mit E2 bezeichnet ist, um die horizontale Achse A3 mittels der Einwirkung auf das die Laserstrahlerzeugungseinrichtung zumindest teilweise umgebende Dreh-Eingriffselement 12. Gemäß einer bevorzugten Ausführungsform ist an den Motor M2 ein Ritzel (Fig. 7) angebracht, welches auf das als Zahnradsegment ausgebildete Dreh-Eingriffselement 12 wirkt. Hinsichtlich der Laserstrahlerzeugungseinrichtung E2 sei ergänzt, dass diese aus einer Laserdiode, Ausrichthilfen für die Laserdiode, Blenden und einem Linsensystem besteht.

Relativ zu der Laserstrahlerzeugungseinrichtung E2 um die Achse A3 drehbar ist ein mit E3 bezeichnetes Steigungsmesswerk vorgesehen, das einen Lagesensor E4 aufweist. Der Lagesensor kann beispielsweise als sogenannte elektronische Libelle ausgebildet sein und entspricht im Wesentlichen hinsichtlich seiner Funktion einer Wasserwaage, da die Horizontallage als Grundposition für die Steigungs-und Neigungseinstellung sowie sämtlichen anderen Arbeitspositionen der Laserstrahlerzeugungseinrichtung E2 verwendet wird. Zu beiden Seiten der Horizontallage weist der Lagesensor E4 einen für Messungen nutzbaren Proportionalbereich auf. Das Steigungsmesswerk E3 ist mittels eines Motors M1, der ein in Fig. 7 besser erkennbares Antriebselement aufweist, bezüglich der Laserstrahlerzeugungseinrichtung E2 und des diese umgebenden Dreh-Eingriffselements verdrehbar.

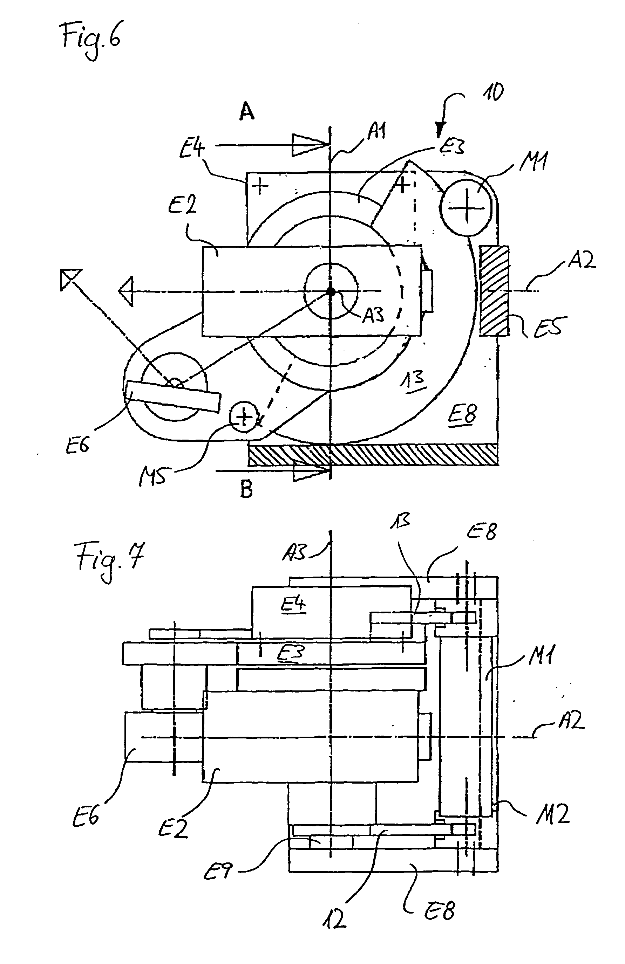

Ferner ist an dem Steigungsmesswerk E3 eine Halterung für den oszillierenden oder pendelnden Spiegel E6 angebracht. Der Spiegel E6 ist um eine horizontale Achse A4 schwenkbar und mittels eines Motors M5, der beispielsweise über einen Exzenter oder einen Riementrieb mit dem Spiegel E6 verbunden ist, oszillierend oder schnell pendelnd antreibbar. Auf diese Weise wird, wie nachfolgend noch genauer beschrieben ist, ein aufgefächerter Laserstrahl erzeugt. Der von der Laserstrahlerzeugungseinrichtung E2 emittierte Laserstrahl ist in den Figuren durch einen Pfeil angedeutet, der z.B. in Fig. 1 und 6 nach links weist.

Aus dem Vorangehenden wird deutlich, dass mittels der Verstellung des Drehgestells E1 durch den Motor M3 um die Achse A1 die Richtung des Laserstrahls bezüglich der Längslage des Gehäuses eingestellt wird. Ferner kann die Querlage des Laserstrahls durch Verstellung des Gestells E5 und der daran angebrachten Elemente um die Achse A2 mittels des Motors M5, der als Quer-Horizontierstellantrieb bezeichnet wird, eingestellt werden.

Eine exakte Einstellung der Neigung oder Steigung des Laserstrahls über einen besonders weiten Verstellbereich erfolgt bei dem erfindungsgemäßen Lasermessgerät wie folgt.

Zunächst wird auf das , in den Fig. 1 bis 5 dargestellte Beispiel Bezug genommen.

Bei dem Gerät gemäß dem Beispiel wird durch Antreiben des Motors M1 das Steigungsmesswerk E3 bezüglich der Laserstrahlerzeugungseinrichtung E2 um einen bestimmten Winkel verdreht, der durch einen Encoder gemessen wird. Hierbei wirkt ein Ritzel, das mit dem Motor M1 verbunden ist, auf das Zahnradsegment 12. Nach dieser Relativdrehung des Steigungsmesswerks E3 bezüglich der Laserstrahlerzeugungseinrichtung E2 wird der Motor M2 betrieben. Der Motor M2 wirkt über ein Antriebselement, beispielsweise ein Ritzel, wie der Motor M1 auf das Zahnradsegment 12.

Jedoch verdreht der Motor M2 die Laserstrahlerzeugungseinrichtung E2 zusammen mit dem Steigungsmesswerk E3 um die Achse A3. Dadurch, dass die beiden genannten Elemente zusammen verstellt werden, gelangt der an dem Steigungsmesswerk E3 vorgesehene Lagesensor E4 aus der um einen bestimmten Winkel verdrehten Lage zurück in die Horizontallage. Der Betrieb des Motors M2 wird angehalten, sobald der Lagesensor E4 die Horizontallage erfasst, was bedeutet, dass die Laserstrahlerzeugungseinrichtung bezüglich der Horizontalen um denjenigen Winkel geneigt ist, um den vorangehend das Steigungsmesswerk E3 bezüglich der Laserstrahlerzeugungseinrichtung E2 verdreht wurde.

Wenn beispielsweise gemäß der Darstellung in Fig. 1 das Steigungsmesswerk E3 um einen bestimmten Winkel in Richtung des Uhrzeigersinns verdreht wurde, so verdreht der Motor M2 nachfolgend das Steigungsmesswerk E3 zusammen mit der Laserstrahlerzeugungseinrichtung E2 entgegen dem Uhrzeigersinn, so dass die Laserstrahlerzeugungseinrichtung unter einem definierten Winkel bezüglich der Horizontalen nach unten geneigt ist. In dieser geneigten Ausrichtung dient der erzeugte Laserstrahl als "Richtfaden" für die fortlaufende Verlegung von Rohrelementen. In gleicher Weise ist die Einstellung einer Steigung möglich, indem die Laserstrahlerzeugungseinrichtung in entsprechend entgegengesetzter Weise, wie vorangehend beschrieben, in eine bezüglich der Horizontalen nach oben weisende Ausrichtung gebracht wird.

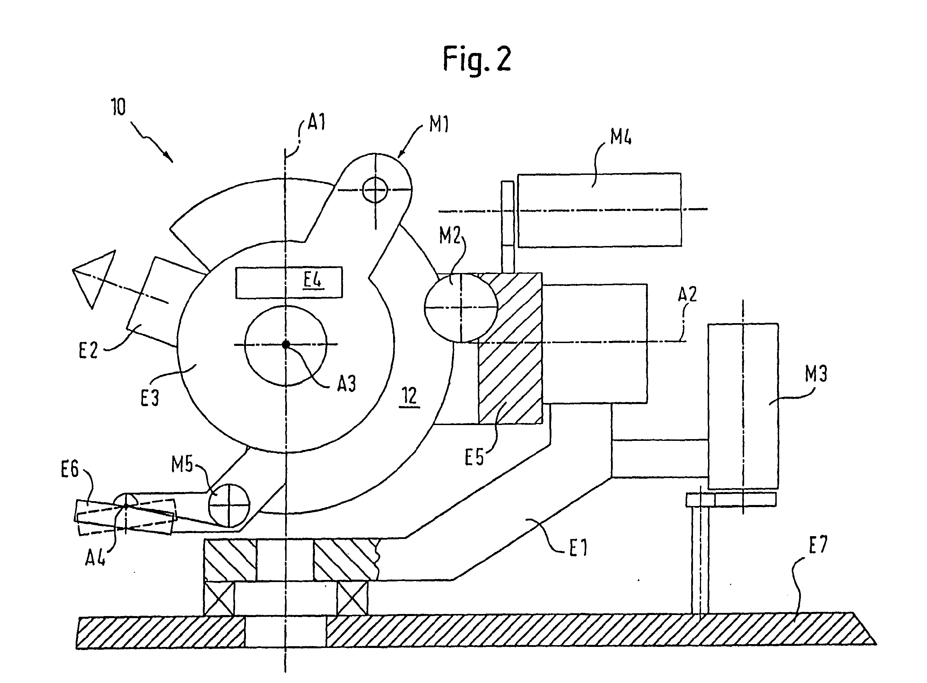

Dies ist in Fig. 2 gezeigt. Hier ist zu erkennen, dass der Lagesensor E4 zurück in die Horizontallage gebracht wurde. Nachdem jedoch vorangehend das Steigungsmesswerk E3 entgegen dem Uhrzeigersinn bezüglich der Laserstrahlerzeugungseinrichtung E2 verdreht wurde, und mittels des Motors M2 die gesamte Anordnung bestehend aus Steigungsmesswerk E3 und Laserstrahlerzeugungseinrichtung E2 in Richtung des Uhrzeigersinns zurückgedreht wurde, bis der Lagesensor E4 seine Horizontallage erreicht, weist der von der Laserstrahlerzeugungseinrichtung E2 erzeugte Strahl mit einem definierten Winkel nach oben. Insbesondere kann die Einstellung des Steigungswertes des Laserstrahls mit einer Auflösung von minimal 0,002 % erfolgen.

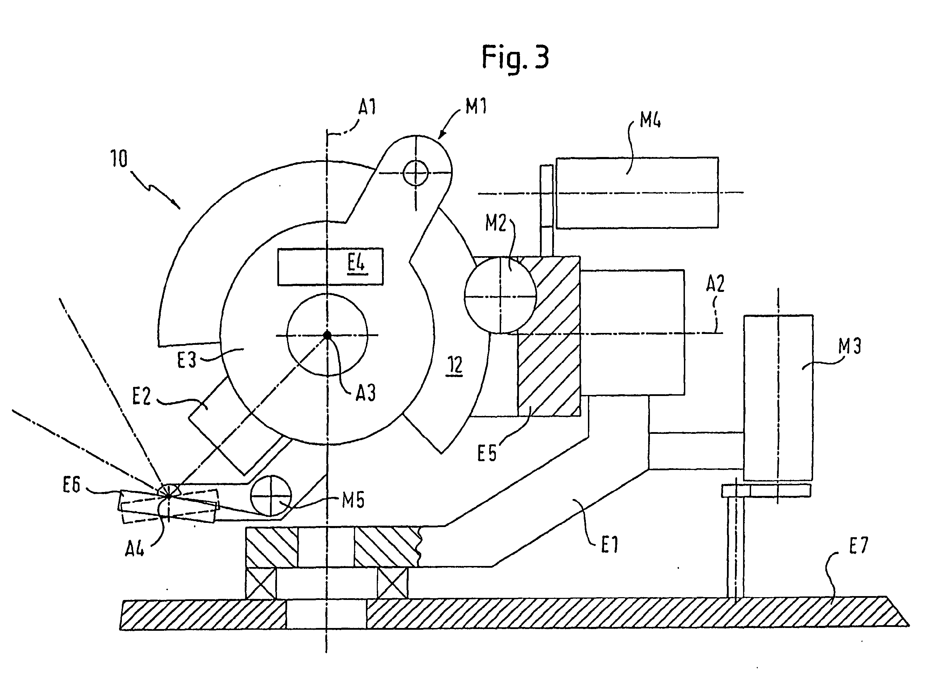

In Fig. 3 ist eine Betriebsstellung gezeigt, die bei dem erfindungsgemäßen Lasermessgerät aufgrund des vergleichsweise großen Verstellbereichs in vorteilhafter Weise realisiert werden kann. Es handelt sich hierbei um die sogenannte Fluchtübertragung. Wie Fig. 3 zeigt, ist der von der Laserstrahlerzeugungseinrichtung E2 emittierte Laserstrahl in etwa unter einem Winkel von 45° nach unten geneigt ausgerichtet, was auf die vorangehend beschriebene Art und Weise realisiert wird. Bei dieser Ausrichtung trifft der Laserstrahl auf einen pendelnd bewegten Spiegel E6. Die Pendelbewegung wird dadurch realisiert, dass der Motor M5, der bevorzugt über einen Exzenter mit dem Spiegel E6 verbunden ist, angetrieben wird, so dass der Spiegel E6 zwischen den beiden in der Figur gezeigten Stellungen um die weitgehend horizontale Achse A4 pendelt.

Hierdurch wird der Laserstrahl aufgefächert und beschreibt im Wesentlichen eine Linie. An dem (nicht gezeigten) Gehäuse des erfindungsgemäßen Lasermessgeräts ist ein Durchtrittsfenster vorgesehen, das den Durchtritt der beschriebenen Laserlinie erlaubt. Diese Laserlinie kann nunmehr an der Oberfläche mittels eines geeigneten Detektors, wie er beispielsweise in der DE 200 03 131 U1 beschrieben ist, erfasst werden. Hierbei führt eine Schwenkbewegung sämtlicher Elemente innerhalb des Gehäuses des Lasermessgeräts um die Achse A1 mittels des Betriebs des Motors M3 zu einer Verlagerung dieser erzeugten Laserlinie nach links oder rechts. Ebenso kann die Laserlinie durch Verschwenken sämtlicher Elemente, die an dem U-förmigen Gestell E5 angebracht sind, um die Achse A2 vertikal ausgerichtet werden.

Wie erwähnt, wird die erzeugte Laserlinie von einem Detektor erfasst, der sich auf einer oberirdischen Fluchtmarke befindet, die den Richtungsverlauf der zu verlegenden Rohrstrecke von einer Revisionsschachtmitte vorgibt. Diese Richtung kann durch Schwenken der inneren Elemente um die Achse A1 mittels der erzeugten Laserlinie angefahren werden. Sobald die Laserlinie korrekt ausgerichtet ist, wird die Laserstrahlerzeugungseinrichtung um die Achse A3 auf den gewünschten Steigungs- oder Neigungswert eingestellt, so dass sich nunmehr der Arbeitsstrahl exakt in der gewünschten, oberirdischen Fluchtlinie befindet. Insbesondere sind mittels des erfindungsgemäßen Lasermessgeräts keine Hilfsmittel zur Richtungs- oder Fluchtübertragung, wie Schnüre oder Fernrohre, erforderlich.

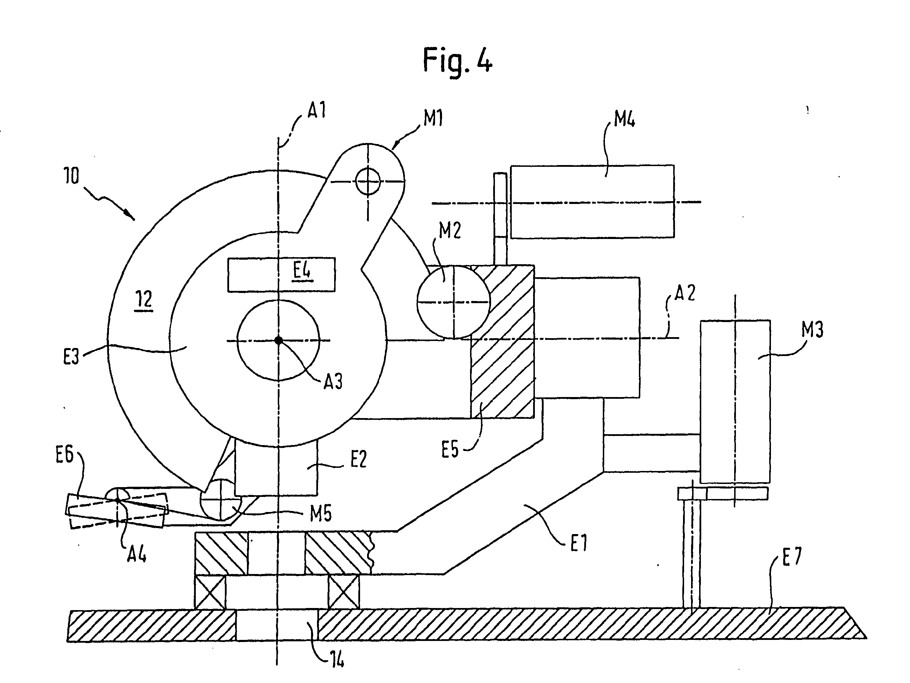

In Fig. 4 ist gezeigt, dass bei dem beispielhaften Gerät aufgrund des großen Verstellbereichs auch eine sogenannte Abwärtslotung mittels des Arbeitsstrahls möglich ist. Hierbei ist die Laserstrahlerzeugungseinrichtung E2 lotrecht nach unten gerichtet. In dem Gehäuse des Lasermessgeräts ist an geeigneter Stelle eine Durchtrittsöffnung 14 vorgesehen. In dieser Stellung ist der Laserstrahl für Ablotungen der oberirdischen Mittenlage eines Revisionsschachtes auf die Mitte eines Gerinnes nach unten zu verwenden.

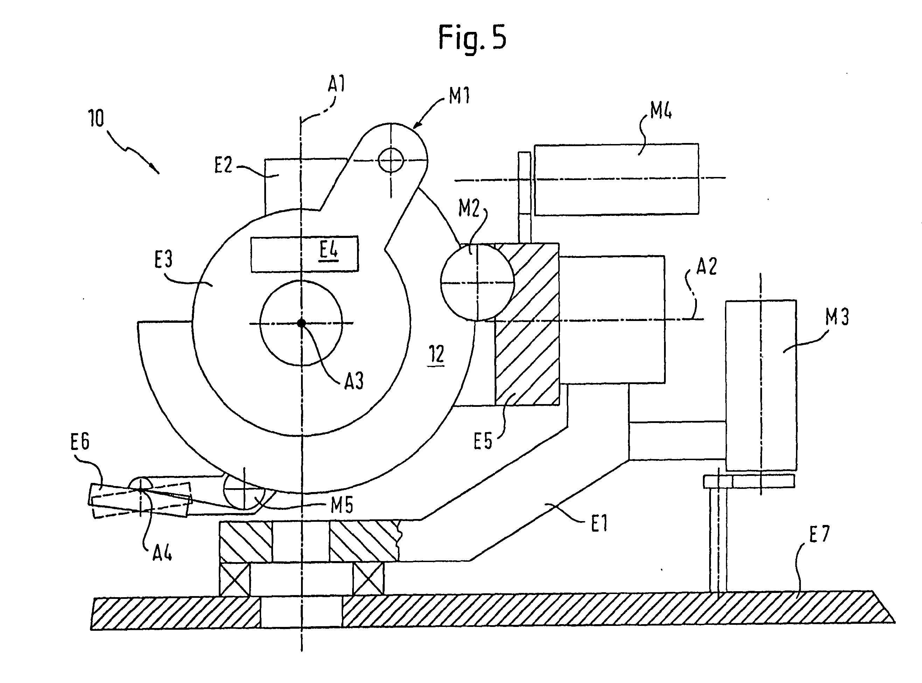

In analoger Weise erfolgt das sogenannte Aufwärtsloten, was in Fig. 5 gezeigt ist. Hier ist die Laserstrahlerzeugungseinrichtung E2 lotrecht nach oben gerichtet und tritt durch ein (nicht gezeigtes) an der Oberseite des Lasermessgeräts vorgesehenes Durchtrittsfenster aus. In dieser Stellung wird der Arbeitsstrahl für die Ausrichtung des Geräts im Revisionsschacht auf die oberirdische Mittenlage der zu verlegenden Rohrstrecke verwendet. Die Einstellung des erforderlichen Winkels von exakt 90° bezüglich der Horizontalen erfolgt bei dem Aufwärts- und Abwärtsloten in der vorangehend beschriebenen Vorgehensweise mittels des Steigungsmesswerks E3.

Der von dem Beispiel abweichende Aufbau der Ausführungsform, der Erfindung, und die sich hieraus ergebenden Änderungen bezüglich der Regelung und Steuerung des Lasermessgeräts gemäß dieser Ausführungsform werden im Folgenden ausführlicher beschrieben werden. Generell wird jedoch angemerkt, dass die Leistungen dieser Ausführungsform, und deren Messverfahren dem Beispiel entsprechen. Insbesondere gilt dies für die Fluchtübertragung.

Wie aus der Seitenansicht der Fig. 6 gut hervorgeht, die eine Teilschnittansicht ist, wirkt der Motor M1 auf ein Zahnsegment 13, das die Drehachse A3 zum Teil umgibt. In der zweiten Ausführungsform kann über den Motor M1 das Steigungsmesswerk E3 relativ zur Laserstrahlerzeugungseinrichtung E2 verdreht werden. Der Motor M1 ist an einer in der Vorderansicht im Wesentlichen U-förmigen Aufnahme E8 angeflanscht. Entsprechend wird bei Betätigung des Motors M1 das Steigungsmesswerk E3 nicht nur relativ zur Laserstrahlerzeugungseinrichtung E2, sondern auch relativ zum Gehäuse des Lasermessgeräts verdreht. Die Befestigung des Motors M1 an der Aufnahme E8 geht auch besonders gut aus der Draufsicht der Fig. 7 hervor.

Der Motor M1 hat hierbei eine Doppelfunktion. Bei Betätigen wirkt er über ein in der Fig. 7 dargestelltes Ritzel auf das Zahnsegment 13 ein. Bei Nichtbetätigen des Motors dreht sich das Antriebsritzel des Motors M1 nicht etwa frei, sondern ist verriegelt. Insofern ist sichergestellt, dass dann, wenn beispielsweise über den Motor M1 der Lagesensor E4 in die horizontale Lage gebracht worden ist, eine unbeabsichtigte Auslenkung des Lagesensors E4 aus der horizontalen Lage unterbunden ist. Eine bevorzugt vorgesehene Federvorspannung dieses Antriebs erhöht die Verriegelungsgenauigkeit.

Die Aufnahme E8 trägt nicht nur den Motor M1 zum Verdrehen des Steigungsmesswerks E2, sondern ebenfalls einen weiteren Motor M2, der zum Verdrehen der Laserstrahlerzeugungseinrichtung E2 um die Drehachse A3 dient. Zudem ist über die Aufnahme E8 die Laserstrahlerzeugungseinrichtung E2 selbst gelagert. In der Draufsicht der Fig. 7 ist der Motor M2 teilweise vom Motor M1 verdeckt, es ist aber dennoch aus der Figur entnehmbar, wie Motor M2 in gleicher Ausbildung wie Motor M1 über ein Ritzel auf ein Zahnsegment 12 wirkt. Die Welle, über die die Laserstrahlerzeugungseinrichtung um die Achse A3 gelagert ist, ist mit E9 bezeichnet.

Über die Anordnung dieser Bauteile gemäß des erfindungsgemässen Ausführungsbeispiels werden der Motor M1 und/oder der Motor M2 von der Aufnahme getragen, über die auch die Laserstrahlerzeugungseinrichtung gelagert ist, so dass bei einer Drehung der Laserstrahlerzeugungseinrichtung um die Achse A3 der oder die Motoren nicht mitbewegt wird/werden. Da die Motoren Bauteile darstellen, die aufgrund ihrer Funktion und der erforderlichen Leistung eine gewisse Mindestbaugröße aufweisen, wird über diese Anordnung der Platzbedarf des gesamten Lasermessgeräts erheblich verringert.

In Fig. 8 sind diese Bauteile in weiteren Einzelheiten wie folgt dargestellt.

Insbesondere geht aus der Fig. 8 hervor, wie die Laserstrahlerzeugungseinrichtung E2 um die Achse E9 über - schematisch angedeutete - Kugellager in der in der Vorderansicht im Wesentlichen U-förmigen Aufnahme E8 drehbeweglich gelagert ist. Um die Welle E9 ist - ebenfalls schematisch angedeutet -bevorzugt über eine vorgespannte Lagerung das Steigungsmesswerk E3 gelagert, wie aus dem Teilschnitt hervorgeht. An dem Steigungsmesswerk E3 ist der Lagesensor E4 angeflanscht.

Auch aus der Vorderansicht der Fig. 8 geht hervor, wie bei Betätigen des Motors M2 über unmittelbares Einwirken auf das Zahnsegment 12 die Laserstrahlerzeugungseinrichtung E2 um die Achse E3 gedreht werden kann. Gleichermaßen geht aus Fig. 8 hervor, wie bei Betätigen des Motors M1 das Steigungsmesswerk E3 samt Lagesensor E4 um die gleiche Drehachse gedreht werden kann. Sofern der Motor M2 bei Nichtbetätigung eine freie Drehung ermöglicht, kann es vorkommen, dass sich bei Betätigen des Motors M1 die Laserstrahlerzeugungseinrichtung E2 geringfügig mitdreht - beispielsweise aufgrund von Lagerreibung. Wie später erläutert werden wird, ist ein solches Mitdrehen nicht schädlich. Typischerweise wird jedoch der Motor M2 ebenso wie der Motor M1 bei Nichtbetätigen eine Sperr- oder Verriegelungsfunktion ausüben, so dass bei Betätigen des einen Motors der andere Motor in seiner Lage verbleibt. Dies bewirkt, dass bei Betätigen des Motors M1 lediglich das Steigungsmesswerk um die Achse A3 gedreht wird, ohne dass sich die Laserstrahlerzeugungseinrichtung E2 mitdreht. Gleichermaßen bleibt bei Betätigen des Motors M2 der Lagesensor E4 in der zuvor eingestellten Lage.

Im Steigungsmesswerk E3 des Lasermessgeräts gemäß der zweiten Ausführungsform ist zusätzlich eine Markierung eingebracht, die gewissermaßen die "Nulllage" der Laserstrahlerzeugungseinrichtung E2 relativ zur Lage des Lagesensors E4 angibt. Auf diese Weise kann die Regelung erfassen, in welchem Drehwinkel um die Achse A3 der Laserstrahl aus der Laserstrahlerzeugungseinrichtung E2 relativ zur Lage des Lagesensors E4 austritt; zusätzlich lässt sich über das Steigungsmesswerk E3 der Betrag der Relativverdrehung zwischen Laserstrahlerzeugungseinrichtung E2 um die Achse A3 und Lagesensor E4 um die Achse A3 feststellen.

Der Betrieb des Lasermessgeräts gemäß der erfindungsgemässen Ausführungsform wird im Folgenden hauptsächlich unter Bezugnahme auf die Fig. 9 erörtert werden.

In der Fig. 9 ist zur Vereinfachung der Darstellung der Lagesensor E4 neben dem eigentlichen Lasermessgerät dargestellt. Die mechanische Verbindung entsprechend den Fig. 1 bis 8 ist jedoch schematisch über eine Doppellinie angedeutet.

In Fig. 9 ist mit R ein Regler dargestellt, der ausgangsseitig mit den Motoren M1 und M2 verbunden ist. Zugeführt werden dem Regler die Signale des Lagesensors E4 und des Steigungsmesswerks E3. Weitere Ein- und Ausgänge sind selbstverständlich ebenfalls möglich, beispielsweise kann derselbe Regler auch die Motoren M3, M4 und M5, Display, Bedienfelder und ähnliches steuern.

Die Einstellung der Neigung oder Steigung des Laserstrahls erfolgt bei der Ausführungsform des erfindungsgemäßen Lasermessgeräts prinzipiell wie bei dem Beispiel.

Beim Einschalten des Lasermessgeräts kann im Rahmen eines Initialisierungsvorgangs beispielsweise durch gegenläufiges Betätigen der Motoren M1 und M2 eine gegenläufige Drehung der Laserstrahlerzeugungseinrichtung E2 und des Lagesensors E4 zusammen mit dem Steigungsmesswerk E3 um die Achse A3 durchgeführt werden. Hierbei streichen die Codierflächen des Encoders aneinander vorbei. Bei diesem Vorbeistreichen wird ebenfalls eine Markierung durchlaufen, die der Regler erfasst und die dem Regler signalisiert, dass in dieser Relativstellung der Laserstrahl bezüglich des Lagesensors E4 seine "Nulllage" aufweist.

Dann wird durch Antreiben des Motors M1 das Steigungsmesswerk E3 um einen bestimmten Winkel verdreht, der dann durch einen Encoder gemessen und an den Regler R weiter gegeben wird, wenn diese Drehung relativ zur Laserstrahlerzeugungseinrichtung E2 stattfindet. Es ist ebenfalls möglich, die Motoren M1 und M2 synchron gleichläufig derart anzutreiben, dass bei einer Drehung des Steigungsmesswerks um die Achse A3 kaum eine oder sogar keine Relativdrehung zu der Laserstrahlerzeugungseinrichtung auftritt. Die Drehung des Steigungsmesswerks E3 wird angehalten, wenn der Lagesensor E4 der Regelung signalisiert, dass er die horizontale Lage erreicht hat.

Nach dieser Drehung des Steigungsmesswerks E3 wird der Motor M2 betrieben. Der Motor M2 wirkt über ein Antriebselement auf das Zahnradsegment 12 und bewirkt, dass sich die Laserstrahlerzeugungseinrichtung E2 relativ zum Steigungsmesswerk E3 und Lagesensor E4 um die Achse A3 dreht. Bei der Betätigung des Motors M2 arretiert der Motor M1 geeigneterweise das Steigungsmesswerk E3 mit Lagesensor E4.

Die Regelung R steuert den Motor M2 gemäß dem vom Bediener eingegebenen Wunschneigungswinkel. Bei der Relativdrehung der Laserstrahlerzeugungseinrichtung E2 gegenüber dem Lagesensor E4 wird der Drehwinkel über den Encoder des Steigungsmesswerks E3 erfasst und dem Regler zugeführt, der dann die Drehung des Laserstrahls stoppt, sobald der gewünschte Neigungswinkel bzw. die gewünschte Arbeitsposition erreicht ist.

Sich eventuell ergebende Abweichungen durch geringfügiges Mitdrehen des Lagesensors E4 liegen im Proportionalmessbereich des Lagesensors E4, so dass eine solche Abweichung über den Regler korrigiert werden kann.

Es versteht sich, dass - auch wenn dies nicht explizit erläutert ist - Elemente des Beispiels mit denen des erfindungsgemässen Ausführungsbeispiels kombiniert werden können, und umgekehrt. Beispielsweise kann - obwohl dies nicht in den Figuren dargestellt ist - auch das Lasermessgerät gemäß dem zweiten Ausführungsbeispiel der vorliegenden Erfindung eine untere Durchtrittsöffnung für den Laserstrahl aufweisen, typischerweise dann, wenn das Gerät zum Abwärtsloten zur Anwendung kommen soll.

Insgesamt bietet das erfindungsgemäße Lasermessgerät folglich neben der Leitlinienfunktion die Möglichkeit einer Aufwärts- und Abwärtslotung mittels des Arbeitsstrahls sowie die Möglichkeit einer einfachen und exakten Fluchtübertragung von oberirdischen Messpunkten auf die zu verlegende Rohrstrecke.

## Patentansprüche

1. Lasermessgerät (10) mit:
- einer Laserstrahlerzeugungseinrichtung (E2), die über eine Aufnahme (E8) um eine Drehachse (A3) verdrehbar gelagert ist,
- einem Steigungsmesswerk (E3) mit einem Lagesensor (E4), die relativ zur Laserstrahlerzeugungseinrichtung (E2) um die Drehachse (A3) verdrehbar sind,
- einer ersten Einrichtung (M1) zum Verdrehen and zum Verriegeln des Steigungsmesswerks (E3) relativ zur Aufnahme (E8),
- einer zweiten Einrichtung (M2) zum Verdrehen der Laserstrahlerzeugungseinrichtung (E2) relativ zum Steigungsmesswerk (E3), und
- einer Einrichtung (R) zum Erfassen der Lage des Lagesensors (E4) sowie der Lage und der Verdrehung der Laserstrahlerzeugungseinrichtung (E2) relativ zum Lagesensor (E4) und zum Steuern der Verdreheinrichtungen (M1, M2) gemäß der erfassten Lagen, wobei
- die Verdreheinrichtungen (M1, M2) jeweils auf Dreh-Eingriffselemente (12, 13) wirken.

2. Lasermessgerät nach Anspruch 1, **dadurch gekennzeichnet, dass** zumindest eines der Dreh-Eingriffselemente (12, 13) die Drehachse (A3) der Laserstrahlerzeugungseinrichtung (E2) über einen Winkel von mehr als etwa 50° umgibt.

3. Lasermessgerät nach Anspruch 2, **dadurch gekennzeichnet, dass** zumindest eines der Dreh-Eingriffselemente (12, 13), bevorzugt das Dreh-Eingriffselement (12), auf das die zweite Einrichtung (M2) zum Verdrehen der Laserstrahlerzeugungseinrichtung (E2) wirkt, die Drehachse (A3) der Laserstrahlerzeugungseinrichtung (E2) über einen Winkel von mehr als etwa 250° umgibt.

4. Lasermessgerät nach zumindest einem der Ansprüche 1 bis 3, **dadurch gekennzeichnet, dass** zumindest eines der Dreh-Eingriffselemente durch ein Zahnradsegment (12) gebildet ist.

5. Lasermessgerät nach zumindest einem der Ansprüche 1 bis 4, **dadurch gekennzeichnet, dass** die Dreh-Eingriffselemente (12, 13) und mit diesen zusammenwirkende Antriebselemente federnd miteinander verspannt sind, so dass ein spielfreier Antrieb erreicht wird.

6. Lasermessgerät nach zumindest einem der vorangehenden Ansprüche,**dadurch gekennzeichnet, dass** ferner ein oszillierend antreibbarer Spiegel (E6) vorgesehen ist, auf den der Laserstrahl gerichtet werden kann.

7. Lasermessgerät (10) nach zumindest einem der vorangehenden Ansprüche, **dadurch gekennzeichnet, dass** die zweite Einrichtung (M2) zum Verdrehen der Laserstrahlerzeugungseinrichtung (E2) auch zum Verriegeln der Laserstrahlerzeugungseinrichtung (E2) relativ zur Aufnahme (E8) ausgebildet ist.

8. Lasermessgerät (10) nach zumindest einem der vorangehenden Ansprüche, **dadurch gekennzeichnet, dass** die Aufnahme (E8) die Laserstrahlerzeugungseinrichtung (E2) im Wesentlichen U-förmig umgibt.

9. Lasermessgerät (10) nach Anspruch 8, **dadurch gekennzeichnet, dass** die Verdreheinrichtungen (M1, M2) in dem durch die U-Form der Aufnahme (E8) gebildeten Raum angeordnet sind.

10. Lasermessgerät (10) nach zumindest einem der vorhergehenden Ansprüche, **dadurch gekennzeichnet, dass** das Steigungsmesswerk (E3) zum Erfassen der Lage der Laserstrahlerzeugungseinrichtung (E2) eine Anzeige umfasst, bevorzugt eine Markierung.

11. Lasermessgerät (10) nach zumindest einem der vorhergehenden Ansprüche, **dadurch gekennzeichnet, dass** es eine weitere dritte Einrichtung (M3) zum Verdrehen der Laserstrahlerzeugungseinrichtung (E2) um eine Achse (A1), die rechtwinklig zu deren Drehachse (A3) und im Betrieb des Lasermessgeräts im Wesentlichen vertikal liegt, und/oder eine weitere vierte Einrichtung (M4) zum Verdrehen der Laserstrahlerzeugungseinrichtung (E2) um eine Achse (A2) umfasst, die rechtwinklig zu deren Drehachse (A3) und im Betrieb des Lasermessgeräts im Wesentlichen horizontal liegt.

12. Lasermessgerät nach Anspruch 11, **dadurch gekennzeichnet, dass** die Drehachsen (A3, A1, A2) einen gemeinsamen Schnittpunkt haben.

13. Verfahren zum Ausrichten eines von einem Lasermessgerät nach zumindest einem der vorhergehenden Ansprüche erzeugten Laserstrahls, mit den Schritten:
Betätigen der ersten Einrichtung (M1) zum Verdrehen des Steigungsmesswerks (E3) relativ zur Aufnahme (E8);
Betätigen der zweiten Einrichtung (M2) zum Verdrehen der Laserstrahlerzeugungseinrichtung (E2) relativ zum Steigungsmesswerk (E3);
Beenden der Betätigung der Einrichtungen (M1, M2), wenn der von der Laserstrahlerzeugungseinrichtung (E2) ausgehende Laserstrahl bezüglich des an dem Steigungsmesswerk (E3) angebrachten Lagesensors (E4) seine Nulllage erreicht hat; und
Betätigen der zweiten Einrichtung (M2) zum Verdrehen der Laserstrahlerzeugungseinrichtung (E2) solange, bis die Laserstrahlerzeugungseinrichtung (E2) einen gewünschten Neigungswinkel relativ zum Steigungsmesswerk (E3) erreicht hat.

14. Verfahren nach Anspruch 13, **dadurch gekennzeichnet, dass** durch die Betätigung der ersten Einrichtung (M1) zum verdrehen des Steigungsmesswerks (E3) und durch die Betätigung der zweiten Einrichtung (M2) zum Verdrehen der Laserstrahlerzeugungseinrichtung (E2) das Steigungsmesswerk (E3) und die Laserstrahlerzeugungseinrichtung (E2) gegenläufig zueinander verdreht werden.

15. Verfahren nach Anspruch 13, **dadurch gekennzeichnet, dass** durch die Betätigung der ersten Einrichtung (M1) zum Verdrehen des Steigungsmesswerks (E3) und durch die Betätigung der zweiten Einrichtung (M2) zum Verdrehen der Laserstrahlerzeugungseinrichtung (E2) das Steigungsmesswerk (E3) und die Laserstrahlerzeugungseinrichtung (E2) synchron gleichläufig derart verdreht werden, dass bei der Drehung des Steigungsmesswerks (E3) um die Achse (A3) im Wesentlichen keine Relativdrehung zu der Laserstrahlerzeugungseinrichtung auftritt.

16. Verfahren nach zumindest einem der Ansprüche 13 bis 15, **dadurch gekennzeichnet, dass** der Laserstrahl in einer Lotstellung von der Laserstrahlerzeugungseinrichtung geradlinig aus dem Lasermessgerät austritt.

17. Verfahren nach zumindest einem der Ansprüche 13 bis 16, **dadurch gekennzeichnet, dass** der Laserstrahl in einer Lotstellung nach oben aus dem Lasermessgerät austritt.

18. Verfahren nach zumindest einem der Ansprüche 13 bis 17, **dadurch gekennzeichnet, dass** das Ausrichten zwischen einer Arbeitsstellung und einer Lotstellung ein Verdrehen um im Wesentlichen 90° umfasst.

19. Verfahren nach zumindest einem der Ansprüche 13 bis 18, **dadurch gekennzeichnet, dass** die Ausrichtung des Laserstrahls zwischen einer Arbeitsstellung and einer Lotstellung mittels der Einrichtung zum Verdrehen der Laserstrahlerzeugungseinrichtung durchgeführt wird.

20. Verfahren nach zumindest einem der Ansprüche 13 bis 19, **dadurch gekennzeichnet, dass** zur Übertragung einer vorgegebenen Flucht auf den Laserstrahl der Laserstrahl aufgefächert wird.

21. Verfahren nach Anspruch 20, **dadurch gekennzeichnet, dass** der Laserstrahl durch Ausrichten auf einen oszillierenden Spiegel aufgefächert wird.

## Claims

1. Laser measuring apparatus (10) having:
- a laser beam-producing device (E2), which is mounted rotatably about an axis of rotation (A3) above a mounting device (E8),
- a gradient-measuring mechanism (E3) with a position sensor (E4), which can be rotated about the axis of rotation (A3) relative to the laser beam-producing device (E2),
- a first device (M1) for rotating and for locking the gradient-measuring mechanism (E3) relative to the mounting device (E8),
- a second device (M2) for rotation of the laser beam-producing device (E2) relative to the gradient-measuring mechanism (E3), and
- a device (R) for recording the position of the position sensor (E4) and the position and the rotation of the laser beam-producing device (E2) relative to the position sensor (E4) and for controlling the rotation devices (M1, M2) according to the recorded positions, wherein
- the rotation devices (M1, M2) act in each case on rotation-engagement elements (12, 13).

2. Laser measuring apparatus according to claim 1, **characterised in that** at least one of the rotation-engagement elements, (12, 13) surrounds the axis of rotation (A3) of the laser beam-producing device (E2) over an angle of more than about 50°.

3. Laser measuring apparatus according to claim 2, **characterised in that** at least one of the rotation-engagement elements (12, 13), preferably the rotation-engagement element (12), on which the second device (M2) acts for rotation of the laser beam-producing device (E2), surrounds the axis of rotation (A3) of the laser beam-producing device (E2) over an angle of more than about 250°.

4. Laser measuring apparatus according to at least one of claims 1 to 3, **characterised in that** at least one of the rotation-engagement elements is formed by a gearwheel segment (12).

5. Laser measuring apparatus according to at least one of claims 1 to 4, **characterised in that** the rotation-engagement elements (12, 13) and drive elements cooperating with the latter are clamped resiliently to one another, so that a clearance-free drive is achieved.

6. Laser measuring apparatus according to at least one of the preceding claims, **characterised in that** a mirror (E6), which can be driven in oscillating manner and onto which the laser beam may be directed, is also provided.

7. Laser measuring apparatus (10) according to at least one of the preceding claims, **characterised in that** the second device (M2) for rotation of the laser beam-producing device (E2) is also designed for locking the laser beam-producing device (E2) relative to the mounting device (E8).

8. Laser measuring apparatus (10) according to at least one of the preceding claims, **characterised in that** the mounting device (E8) surrounds the laser beam-producing device (E2) in essentially U-shaped manner.

9. Laser measuring apparatus (10) according to claim 8, **characterised in that** the rotation devices (M1, M2) are arranged in the space formed by the U shape of the mounting device (E8).

10. Laser measuring apparatus (10) according to at least one of the preceding claims, **characterised in that** the gradient-measuring mechanism (E3) for recording the position of the laser beam-producing device (E2) comprises a display, preferably a marker.

11. Laser measuring apparatus (10) according to at least one of the preceding claims, **characterised in that** it comprises a further third device (M3) for rotation of the laser beam-producing device (E2) about an axis (A1), which lies at right angles to the axis of rotation (A3) thereof and during operation of the laser measuring apparatus lies essentially vertically, and/or a further fourth device (M4) for rotation of the laser beam-producing device (E2) about an axis (A2), which lies at right angles to the axis of rotation (A3) thereof and during operation of the laser measuring apparatus lies essentially horizontally.

12. Laser measuring apparatus according to claim 11, **characterised in that** the axes of rotation (A3, A1, A2) have a common point of intersection.

13. Process for aligning a laser beam produced by a laser measuring apparatus according to at least one of the preceding claims, having the steps:
actuating the first device (M1) for rotation of the gradient-measuring mechanism (E3) relative to the mounting device (E8);
actuating the second device (M2) for rotation of the laser beam-producing device (E2) relative to the gradient-measuring mechanism (E3);
completing actuation of the devices (M1, M2) when the laser beam starting from the laser beam-producing device (E2) has reached its zero position with respect to the position sensor (E4) attached to the gradient-measuring mechanism (E3); and
actuating the second device (M2) for rotation of the laser beam-producing device (E2) until the laser beam-producing device (E2) has reached a required angle of inclination relative to the gradient-measuring mechanism (E3).

14. Process according to claim 13, **characterised in that** by actuating the first device (M1) for rotation of the gradient-measuring mechanism (E3) and by actuating the second device (M2) for rotation of the laser beam-producing device (E2), the gradient-measuring mechanism (E3) and the laser beam-producing device (E2) are rotated in opposite direction to one another.

15. Process according to claim 13, **characterised in that** by actuating the first device (M1) for rotation of the gradient-measuring mechanism (E3) and by actuating the second device (M2) for rotation of the laser beam-producing device (E2), the gradient-measuring mechanism (E3) and the laser beam-producing device (E2) are rotated synchronously in the same direction, such that when rotating the gradient-measuring mechanism (E3) about the axis (A3) essentially no relative rotation with respect to the laser beam-producing device occurs.

16. Process according to at least one of claims 13 to 15, **characterised in that** the laser beam emerges in a straight line from the laser measuring apparatus in a vertical position from the laser beam-producing device.

17. Process according to at least one of claims 13 to 16, **characterised in that** the laser beam emerges from the laser measuring apparatus at the top in a vertical position.

18. Process according to at least one of claims 13 to 17, **characterised in that** the alignment between an operating position and a vertical position comprises a rotation about essentially 90°.

19. Process according to at least one of claims 13 to 18, **characterised in that** the alignment of the laser beam between an operating position and a vertical position is carried out by means of the device for rotation of the laser beam-producing device.

20. Process according to at least one of claims 13 to 19, **characterised in that** the laser beam is fanned out to transfer a preset alignment to the laser beam.

21. Process according to claim 20, **characterised in that** the laser beam is fanned out by alignment with an oscillating mirror.

## Revendications

1. Dispositif de mesure à laser (10) comprenant :
- un dispositif de production de rayon laser (E2), monté à rotation autour d'un axe de rotation (A3) sur un support (E8),
- un appareil de mesure de pente (E3) comprenant un capteur de position (E4), qui sont susceptibles de tourner autour de l'axe de rotation (A3), par rapport au dispositif de production de rayon laser (E2),
- un premier dispositif (M1), pour la rotation et pour le verrouillage du dispositif de mesure de pente (E3) par rapport au support (8),
- un deuxième dispositif (M2), pour la rotation du dispositif de production de rayon laser (E2) par rapport au dispositif de mesure de pente (E3), et
- un dispositif (R), pour détecter la position de capteurs de position (E4) ainsi que la position et la rotation du dispositif de production de rayon laser (E2) par rapport au capteur de position (E4) et pour commander les dispositifs de rotation (M1, M2) selon les positions détectées, où
- les dispositifs de rotation (M1,M2) agissent chacun sur des éléments à mise en prise par rotation (12,13).

2. Dispositif de mesure à laser selon la revendication 1, **caractérisé en ce qu'**au moins l'un des éléments de mise en prise par rotation (12, 13) entoure l'axe de rotation A3 du dispositif de production de rayon laser (A2) sur un angle supérieur à environ 50°.

3. Dispositif de mesure à laser selon la revendication 2, **caractérisé en ce qu'**au moins l'un des éléments de mise en prise par rotation (12, 13), de préférence l'élément de mise ne prise par rotation (12) sur lequel agit le deuxième dispositif (M2) pour la rotation du dispositif de production de rayon laser (E2), entoure l'axe de rotation (A3) du dispositif de production de rayon laser (E2) sur un angle supérieur à environ 250°.

4. Dispositif de mesure à laser selon au moins l'une des revendications 1 à 3, **caractérisé en ce qu'**au moins l'un des éléments de mise en prise par rotation est formé par un segment de roue dentée (12).

5. Dispositif de mesure à laser selon au moins l'une des revendications 1 à 4, **caractérisé en ce que** les éléments de mise en prise par rotation (12, 13) et des éléments d'entraînement coopérant avec ceux-ci sont serrés ensemble élastiquement, de manière à obtenir un entraînement sans jeu.

6. Dispositif de mesure à laser selon au moins l'une des revendications précédentes, **caractérisé en ce qu'**en outre est prévu un miroir (E6), pouvant être entraîné de façon à osciller, miroir sur lequel peut être dirigé le rayon laser.

7. Dispositif de mesure à laser (10) selon au moins l'une des revendications précédentes, **caractérisé en ce que** le deuxième dispositif (M2), pour faire tourner le dispositif de production de rayon laser (E2), est réalisé également pour verrouiller le dispositif de production de rayon laser (E2) par rapport au support (E8) .

8. Dispositif de mesure à laser (10) selon au moins l'une des revendications précédentes, **caractérisé en ce que** le support (E8) entoure sensiblement en forme de U le dispositif de production de rayon laser (E2).

9. Dispositif de mesure à laser (10) selon la revendication 8, **caractérisé en ce que** les dispositifs de rotation (M1, M2) sont disposée dans l'espace formé par la forme en U du support (E8).

10. Dispositif de mesure à laser (10) selon au moins l'une des revendications précédentes, **caractérisé en ce que** le dispositif de mesure de pente (E3) comprend un affichage, de préférence un marquage, pour détecter la position du dispositif de production de rayon laser (E2).

11. Dispositif de mesure à laser (10) selon au moins l'une des revendications précédentes, **caractérisé en ce qu'**il comprend un autre troisième dispositif (M3) pour faire tourner le dispositif de production de rayon laser (E2) autour d'un axe (A1), perpendiculaire à son axe de rotation (A3) et sensiblement vertical lorsque le dispositif de mesure à laser est en fonctionnement, et/ou comprend un autre quatrième dispositif (M4) pour la rotation du dispositif de production de rayon laser (E2) autour d'un axe (A2), perpendiculaire à son axe de rotation (A3) et sensiblement horizontal lorsque le dispositif de mesure à laser est en fonctionnement.

12. Dispositif de mesure à laser selon la revendication 11, **caractérisé en ce que** les axes de rotation (A3, A1, A2) ont un point d'intersection commun.

13. Procédé d'alignement d'un rayon laser, produit par un dispositif de mesure selon au moins l'une des revendications précédentes, présentant les étapes suivantes :
actionnement du premier dispositif (M1) pour faire tourner le dispositif de mesure de pente (E3) par rapport au support (E8) ;
actionnement du deuxième dispositif (M2) pour faire tourner le dispositif de production de rayon laser (E2) par rapport au dispositif de mesure de pente (E3) ;
achèvement de l'actionnement des dispositifs (M1, M2) lorsque le rayon laser, sortant du dispositif de production de rayon laser (E2), a atteint sa position zéro par rapport aux capteurs de position (E4) montés sur le dispositif de mesure de pente (E3) ; et
actionnement du deuxième dispositif (M2) pour la rotation du dispositif de production de rayon laser (E2), jusqu'à ce que le dispositif de production de rayon laser (E2) ait atteint un angle d'inclinaison souhaité par rapport au dispositif de mesure de pente (A3).

14. Procédé selon la revendication 13, **caractérisé en ce que**, de par l'actionnement du premier dispositif (M1) pour la rotation du dispositif de mesure de pente (E3) et de par l'actionnement du deuxième dispositif (M2) pour la rotation du dispositif de production de rayon laser (E2), ledit dispositif de mesure de pente (E3) et le dispositif de production de rayon laser (E2) sont tournés l'un par rapport à l'autre en sens inverse.

15. Procédé selon la revendication 13, **caractérisé en ce que**, de par l'actionnement du premier dispositif (M1) pour la rotation du dispositif de mesure de pente (E3) et de par l'actionnement du deuxième dispositif (M2) pour la rotation du dispositif de production de rayon laser (E₂), ledit dispositif de mesure de pente (E3) et le dispositif de production de rayon laser (E2) sont tournés en sens inverse da façon synchrone, de manière que, lors de la rotation du dispositif de mesure de pente (E3) autour de l'axe (A3), pratiquement aucune rotation relative par rapport au dispositif de production do rayon laser ne se produise.

16. Procédé selon au moins l'une des revendications 13 à 15, **caractérisé en ce que** le rayon laser, en une position d'aplomb, sort du dispositif de production de rayon laser en ligne droite hors du dispositif de mesure à laser.

17. Procédé selon au moins l'une des revendications 13 à 16, **caractérisé en ce que** le rayon laser sort vers le haut, en une position verticale, du dispositif de mesure à laser.

18. Procédé selon au moins l'une des revendications 13 à 17, **caractérisé en ce que** l'alignement entre une position de travail et une position d'aplomb comprend une rotation sensiblement de 90°.

19. Procédé selon au moins l'une des revendications 13 à 18, **caractérisé en ce que** l'alignement du rayon laser, entre une position de travail et une position d'aplomb, est effectué au moyen du dispositif de rotation du dispositif de production de rayon laser.

20. Procédé selon au moins l'une des revendications 13 à 19, **caractérisé en ce que**, pour la transmission d'un alignement prédéterminé sur le rayon laser, le rayon laser est déployée en éventail.

21. Procédé selon la revendication 20, **caractérisé en ce que** le rayon laser est déployé en éventail par pointage sur un miroir oscillant.
